# EUROPÄISCHE PATENTANMELDUNG

(11) **EP 2 123 994 A1**
(43) Veröffentlichungstag der Anmeldung: **25.11.2009**
(21) Anmeldenummer: 08009442.8
(22) Anmeldetag: 23.05.2008
(51) Int. Cl.: F24J 3/08

(54) **Einführvorrichtung für eine Erdwärmesonde**

(71) Anmelder: HAKA.Gerodur AG, 9201 Gossau SG (CH)
(72) Erfinder: Ebnöther, Alfons, 8637 Laupen (CH); Mayer, Peter, 8717 Benken (CH); Vollenweider, Bruno, 8864 Reichenburg (CH)
(74) Vertreter: Schaad, Balass, Menzl & Partner AG

(57) **Zusammenfassung**

Einführvorrichtung (1) für eine Erdwärmesonde (50, 60), umfassend eine Einführhülle (10) und ein Befestigungselement (20) zur Befestigung der Einführhülle (10) an der Erdwärmesonde (50, 60). Die Einführhülle (10) ist dazu bestimmt, in montiertem Zustand die Erdwärmesonde (50, 60) im Bereich ihres Sondenfusses (51, 61) zu umgeben und wird durch einen eigenständig formstabilen, hülsenförmigen Körper gebildet.

## Beschreibung

Die vorliegende Erfindung betrifft eine Einführvorrichtung für eine Erdwärmesonde gemäss dem Oberbegriff des Anspruchs 1.

Erdwärmesonden werden bekanntermassen zur Ausnutzung der Erdwärme als Wärmetauscher in den Boden eingesetzt. Ein flüssiger Wärmeträger wird von einem ersten Sondenkopf über ein Sondenzulaufrohr zu einem Sondenfuss geführt, dort umgelenkt und über ein Sondenrücklaufrohr zu einem zweiten Sondenkopf geführt. Die beiden Sondenköpfe sind typischerweise über ein Sammelzulaufrohr bzw. über ein Sammelrücklaufrohr an eine Wärmepumpe angeschlossen. In der Regel wird in ein Bohrloch ein Erdwärmesondenpaar eingesetzt, dem die beiden Sondenköpfe gemeinsam sind.

Typischerweise werden Sondenrohre und Sondenfuss aus Kunststoff gefertigt. Da die Erdwärmesonde ohne den flüssigen Wärmeträger relativ leicht ist, reicht das Eigengewicht der Sonde oft nicht aus, um ein problemloses Absenken in ein Bohrloch zu gewährleisten. Zudem sind die Sondenrohre durch die Lagerung in der Regel gekrümmt, was das Einführen in ein enges Bohrloch zusätzlich erschwert. In vielen Fällen ist das Bohrloch ausserdem ab einer gewissen Tiefe mit Grundwasser gefüllt, so dass beim Absenken der leeren Rohre durch das Wasser eine Auftriebskraft auf die Erdwärmesonde ausgeübt wird.

In CH 653 120 wird eine Vorrichtung zum Einführen einer Erdwärmesonde in ein Bohrloch offenbart. Dabei werden zwei Rohrpaare durch Briden zusammengehalten, welche die Vor- und Rücklaufrohre der Rohrpaare umfassen. Der Abstand zwischen den Vor- und Rücklaufrohren wird durch eine stabförmige Verstrebung konstant gehalten, die im Zentrum der vier Rohre angebracht ist. Die stabförmige Verstrebung ist ausserdem mit den Briden verbunden.

EP-A-1 387 130 offenbart ein formstabiles Fixierelement für Rohrpaare einer Erdwärmesonde, mit dem ein gleichbleibender Abstand der Rohrabschnitte gewährleistet wird und eine Auslenkung nach Aussen oder ein Wegdrehen der Rohre nicht mehr möglich ist. Ausserdem weist das Fixierelement eine Stossfläche für eine Einführstange auf, so dass das Fixierelement mit der von ihm gehaltenen Erdwärmesonde mittels Einführstange in das Bohrloch gestossen werden kann.

Eine weitere mögliche Massnahme zum Einführen der Erdwärmesonde in ein Bohrloch ist das Anbringen von Gewichten an der Erdwärmesonde. Dies kann beispielsweise bei einem Y-förmigen Sondenfuss, wie er in EP-A-1 387 130 (Fig. 5) beschrieben ist, bewerkstelligt werden: Bohrungen in einer Lasche am Sondenfuss ermöglichen das Anbringen eines Gewichts, das dem Auftrieb entgegen wirkt, der durch das im Bohrloch in der Regel vorhandene Wasser bewirkt wird. Ausserdem trägt das Gewicht dazu bei, dass die Erdsonde beim Einbringen gerade und in Längsrichtung des Bohrlochs bleibt.

Bei all diesen Ausführungsformen ist der Sondenfuss einer relativ grossen Belastung ausgesetzt. Dabei ist aber gerade der Sondenfuss in der Regel sehr empfindlich. Sobald die Erdwärmesonde mit der wärmeleitenden Flüssigkeit befüllt ist, bewirkt diese einen Innendruck, der im Bereich der Umlenkung am grössten ist. Ausserdem ist der Sondenfuss in vielen Fällen ein separates Bauteil, das mit den Vor- und Rücklaufrohren, beispielsweise durch eine Schweissnaht, verbunden ist. Durch die Krafteinwirkungen beim Einführen der Erdwärmesonde in das Bohrloch - sei es durch Stossen mit einer Einführstange oder durch Ziehen mittels eines Gewichts - kann der Sondenfuss beschädigt werden.

Eine weitere Ursache für Schäden am Sondenfuss bilden vorstehendes Erdreich, Steine und andere harte Gegenstände im Bohrloch, die zu Riefen, Kratzern oder gar Löchern in der Erdwärmesonde führen können. Diesem Problem wird etwa in CH 653 120 Rechnung getragen, indem der Sondenfuss mit einer Schrumpfhülse überzogen wird.

Ein weiteres Problem solcher vorbekannten Schutzhüllen ist, dass der Sondenfuss beim Einführen mittels einer Einführstange durch die Stosskraft beschädigt werden kann.

Es ist daher eine Aufgabe der vorliegenden Erfindung, eine Einführvorrichtung zur Verfügung zu stellen, welche die Erdwärmesonde beim Einführen in ein Bohrloch vor vorstehenden Steinen und Erdreich schützt und welche es gleichzeitig erlaubt, die Beanspruchung zu minimieren, welcher der Sondenfuss durch die zum Einführen auszuübende Krafteinwirkung ausgesetzt ist.

Die Aufgabe wird gelöst durch eine Einführvorrichtung für eine Erdwärmesonde gemäss Anspruch 1. Weitere bevorzugte Ausführungsformen sind in den abhängigen Ansprüchen beschrieben.

Die vorliegende Erfindung betrifft eine Einführvorrichtung für eine Erdwärmesonde, die eine Einführhülle umfasst, die dazu bestimmt ist, in montiertem Zustand die Erdwärmesonde im Bereich des Sondenfusses zu umgeben. Die erfindungsgemässe Einführvorrichtung zeichnet sich aus durch einen die Einführhülle bildenden, eigenständig formstabilen, hülsenförmigen Körper mit einem vorlaufenden Ende und umfasst zudem ein Befestigungselement zur Befestigung der Einführhülle an der Erdwärmesonde.

Die erfindungsgemässe Einführvorrichtung verhindert, dass die Erdwärmesonde, insbesondere der Sondenfuss mit der Umlenkung, beim Einführen in ein Bohrloch durch vorstehendes Erdreich, Steine oder andere harte Gegenstände beschädigt wird. Dadurch wird das Risiko eines Rohrbruchs erheblich gesenkt und die Lebensdauer der Erdwärmesonde erhöht.

Überdies ist es bei dieser Lösung möglich, auf das erfindungsgemässe Befestigungselement mit einer Einführstange eine Stosskraft zum Einführen der Erdwärmesonde in ein Bohrloch auszuüben. Die Krafteinwirkung erfolgt dabei nicht direkt auf den Sondenfuss, sondern auf das Befestigungselement. Von dort wird die Kraft zumindest teilweise auf die Einführhülle übertragen, so dass die auf den Sondenfuss wirkende Belastung beim Absenken minimiert wird.

Die Einführhülle ist als eigenständig formstabiler, hülsenförmiger Körper ausgebildet. Als "hülsenförmig" wird hier ein Körper bezeichnet, der im wesentlichen die Form eines Hohlzylinders aufweist. Eine solche Einführhülle besitzt ein vorlaufendes Ende, das beim Einführen der Erdwärmesonde zusammen mit der erfindungsgemässen Einführvorrichtung in ein Bohrloch voranläuft, sowie ein dem vorlaufenden Ende gegenüberliegendes, offenes Ende. Das vorlaufende Ende ist vorzugsweise geschlossen, so dass beim Einführen keine Steine oder Erdreich in die Einführhülle hinein gelangen.

Als ein eigenständig formstabiler Körper besitzt die Einführhülle von sich aus eine feste Form, die nicht erst durch das Zusammenwirken der Einführhülle mit dem Befestigungselement oder der Erdwärmesonde bestimmt wird. Dadurch werden radiale Kräfte, die beim Einführen der Erdwärmesonde in ein Bohrloch auftreten können, von der Einführhülle aufgenommen. Vorzugsweise ist die erfindungsgemässe Einführhülle einstückig ausgebildet. Alternativ ist es aber auch möglich, dass die Einführhülle mehrteilig ausgebildet ist, beispielsweise als zwei Halbschalen, die beim Montieren der Einführvorrichtung an der Erdwärmesonde zusammengesetzt werden.

Werden Einführhülle und Befestigungselement als zwei separate Bauteile ausgestaltet, ist es möglich, Einführhülle und Befestigungselement einzeln anzufertigen und sie zum gewünschten Zeitpunkt an der Erdwärmesonde anzubringen. Je nach Anordnung der Sondenrohre im Bohrloch und der Bodenbeschaffenheit kann die Grösse und Form der Einführhülle so gewählt werden, dass die Erdwärmesonde optimal vor Beschädigungen geschützt ist und das Einführen der Sonde ohne Probleme bewerkstelligt werden kann. Ausserdem kann die Grösse und Form der Einführhülle derart gewählt werden, dass sie zur Aufnahme einer einzelnen Erdwärmesonde, eines Sondenpaars oder von mehreren Erdwärmesonden geeignet ist. Vorzugsweise ist die Einführhülle derart ausgestaltet, dass sie in montiertem Zustand den Bereich der Sondenfüsse eines Sondenpaars umgibt.

Die erfindungsgemässe Einführvorrichtung weist ein Befestigungselement auf, das zur Befestigung der Einführhülle an der Erdwärmesonde dient. Im Gegensatz zu den vorbekannten Schrumpfhülsen kann die vorliegende Einführhülle deshalb nicht nur an der Erdwärmesonde formschlüssig anliegend ausgestaltet werden, sondern es kann auch ein radialer Abstand zwischen Einführhülle und Erdwärmesonde gebildet werden, der einen Hohlraum zwischen Einführhülle und Erdwärmesonde bewirkt. Der Hohlraum wirkt als "Pufferzone", so dass selbst tiefe Kratzer oder leichte Verformungen in der Einführhülle die Erdwärmesonde nicht beeinträchtigen.

In einer bevorzugten Ausführungsform ist die erfindungsgemässe, hülsenförmige Einführhülle in einem Bereich gegen das vorlaufende Ende hin wenigstens annähernd kegelförmig verjüngt und weist eine abgerundete Spitze auf. Durch diese "Torpedo-förmige" Ausgestaltung der Einführhülle wird beim Einführen der Erdwärmesonde in ein Bohrloch allenfalls im Weg stehendes Material seitlich verdrängt. Diese Keilwirkung der Einführhülle bewirkt somit, dass die Belastung für die Erdwärmesonde minimiert ist.

Wird die erfindungsgemässe Einführhülle als separates Bauteil ausgestaltet und kann also separat gefertigt werden, so kann das Material der Einführhülle unabhängig von demjenigen der Erdwärmesonde gewählt werden. Vorzugsweise besteht die Einführhülle aus einem harten, bei Raumtemperatur nicht leicht verformbaren Material, so dass sie beim Einführen in ein Bohrloch selbst bei grossem Widerstand nicht eingedrückt wird. Vorzugsweise besteht die Einführhülle aus einem polymeren Werkstoff, wobei zusätzlich Füll- und/oder Verstärkungsstoffe enthalten sein können. Besonders bevorzugt besteht die Einführhülle aus Reaktionsharz oder einem oder mehreren Thermoplasten, insbesondere Polypropylen (PP), Polyethylen (PE), Polyamid (PA), Polystyrol (PS), Styrol-Butadien (SB), Acrylnitril-Butadien-Styrol-Polymerisaten (ABS) und/oder Polyurethan (PU). Dabei wird die Einführhülle bevorzugt mittels Extrusionsblasen oder Spritzguss angefertigt. Alternativ dazu kann die Einführhülle auch aus einem metallischen Werkstoff bestehen.

Das Befestigungselement ist vorzugsweise durch das dem vorlaufenden Ende gegenüberliegende, offene Ende der Einführhülle in diese einführbar. Dies ermöglicht einen problemlosen Transport der Einzelteile und erlaubt es, Einführhülle, Befestigungselement und Erdwärmesonde optimal aufeinander abzustimmen und erst kurz vor dem Einführen in ein Bohrloch miteinander zu verbinden.

Vorzugsweise ist das Befestigungselement mit der Einführhülle mittels eines Befestigungsorgans verbindbar. Das Befestigungsorgan kann dabei Teil der Einführhülle oder des Befestigungselements sein oder als eigenständiges Bauteil, beispielsweise eine Niete oder Schraube, ausgestaltet sein. Idealerweise ist das Befestigungselement zusammen mit dem Befestigungsorgan einstückig ausgebildet. Alternativ ist es aber auch möglich, das Befestigungselement aus zwei oder mehreren Teilen zusammenzusetzen.

In einer bevorzugten Ausführungsform weist das Befestigungselement mindestens einen, vorzugsweise zwei Befestigungsarme zur Befestigung des Befestigungselements an der Einführhülle auf. Diese Befestigungsarme können beispielsweise mittels Zapfen, Schrauben, Nieten, Klebstoff, Formschluss, Kabelbinder, Schweissen oder ein Gewinde an der Einführhülle befestigt werden. Vorzugsweise sind die Befestigungsarme als integraler Teil des Befestigungselements ausgebildet und weisen ein Gelenk - beispielsweise ein Filmscharnier - auf, welches das Umklappen der Befestigungsarme über den oberen Rand der Einführhülle ermöglicht.

Wenn das Befestigungselement als separat geformtes Bauteil ausgestaltet wird, kann es aus einem beliebigen geeigneten Material angefertigt werden, unabhängig vom Material der Einführhülle oder der Erdwärmesonde. Vorzugsweise besteht das Befestigungselement aus einem polymeren Werkstoff, wobei zusätzlich Füll- und/oder Verstärkungsstoffe enthalten sein können. Besonders bevorzugt besteht das Befestigungselement aus einem Reaktionsharz oder Thermoplasten, insbesondere Polypropylen (PP), Polyethylen (PE), Polyamid (PA), Polystyrol (PS), Styrol-Butadien (SB), Acrylnitril-Butadien-Styrol-Polymerisaten (ABS) und/oder Polyurethan (PU). Dabei wird das Befestigungselement bevorzugt mittels Extrusionsblasen oder Spritzguss angefertigt. Alternativ dazu kann das Befestigungselement auch aus einem metallischen Werkstoff bestehen.

In einer bevorzugten Ausführungsform weist das Befestigungselement mindestens einen in montiertem Zustand diametral durch die Einführhülle verlaufenden Steg auf, der in montiertem Zustand auf dem Sondenfuss aufliegt. Ein solches stegförmiges Befestigungselement fixiert die Erdwärmesonde in der Einführhülle und verhindert ein Herausrutschen oder Drehen.

Wird die erfindungsgemässe Einführvorrichtung dazu verwendet, ein Erdwärmesondenpaar zu schützen, so weist das Befestigungselement vorzugsweise einen in montiertem Zustand diametral durch die Einführhülle verlaufenden Steg mit zwei Stegabschnitten auf, wobei die Stegabschnitte in montiertem Zustand jeweils auf einem der beiden Sondenfüsse aufliegen. Je nachdem, ob die beiden Sondenfüsse auf gleicher Höhe oder versetzt angeordnet sind, ist es vorteilhaft, dass die beiden Stegabschnitte gleich lang respektive verschieden lang ausgestaltet sind. Besonders bevorzugt ist es, dass das Befestigungselement einen zweiten, in montiertem Zustand diametral durch die Einführhülle verlaufenden Steg mit zwei Stegabschnitten aufweist, der den ersten Steg im rechten Winkel schneidet. Durch diesen zweiten Steg wird ein Bewegen der vier Sondenrohre des Erdwärmesondenpaares in der Einführhülle weitgehend verhindert. Ausserdem wird durch einen solchen Steg die Einführhülle zusätzlich versteift und noch stabiler gemacht.

Zusätzlich ist es möglich, das Befestigungselement direkt mit der Erdwärmesonde zu verbinden, zum Beispiel durch Schrauben, durch Bolzen, durch Kabelbinder, durch eine Schnappverbindung, durch Zapfen, durch Widerhaken, durch ein Gewinde, durch einen Bajonettverschluss, durch Schweissen und/oder durch Kleben. Dadurch kann die Verbindung zwischen der Erdwärmesonde und der Einführhülle zusätzlich verstärkt und stabilisiert werden.

Im oberen Bereich des Befestigungselements weisen die Stegabschnitte vorzugsweise Durchbrüche auf. Beim Einfüllen der Injektionsmasse erlauben es diese Durchbrüche, dass die Injektionsmasse durch die Stegabschnitte hindurchtreten kann. Dies erlaubt eine gleichmässige Verteilung der Injektionsmasse. Zudem wird in dieser Ausführungsform die Erdwärmesonde in der Einführhülle weiter stabilisiert. Im unteren Bereich des Befestigungselements weisen die Stegabschnitte vorzugsweise rippenartige Vorsprünge auf. Durch diese Vorsprünge wird die Lage der Erdwärmesonde in der Einführhülle festgelegt und stabilisiert.

In einer bevorzugten Ausführungsform weist das Befestigungselement eine Aufnahme für den Angriff einer Einführstange auf. Eine solche Aufnahme erlaubt es, auf das Befestigungselement eine Stosskraft zum Einführen der Erdwärmesonde in ein Bohrloch auszuüben. Dabei wirkt die Kraft nicht direkt auf den Sondenfuss, sondern wird vom Befestigungselement auf die Einführhülle und auf die Erdwärmesonde übertragen. Dadurch wird die Belastung für den Sondenfuss minimal gehalten.

Idealerweise ist die Aufnahme für die Einführstange als eine Vertiefung im Befestigungselement ausgestaltet, die gegen das offene Ende der Einführhülle hin offen ist, so dass die Einführstange problemlos in die Vertiefung einführbar ist. Dadurch wird gewährleistet, dass das Stossen genau in der Mitte des Befestigungselements, also in der Längsachse von Befestigungselement, Einführvorrichtung und Bohrloch, erfolgt. Ausserdem wird ein Abrutschen der Einführstange während des Stossens verhindert. Auf diese Weise erfolgt die Krafteinwirkung genau in der Absenkrichtung und vermeidet so ein Ausschwenken der Erdwärmesonde in Richtung der Bohrlochwände.

In einer bevorzugten Ausführungsform weist die Einführhülle mindestens einen Durchlass auf, welcher derart ausgestaltet ist, dass beim Einführen der Einführhülle in ein Bohrloch das Durchtreten von Wasser möglich ist. Dadurch wird die Auftriebskraft des Wassers, die dem Einführen der Erdwärmesonde entgegen wirkt, verringert, da die Einführhülle mit Wasser gefüllt wird. Zudem staut sich das Wasser nicht unterhalb der Einführhülle an, sondern kann sowohl entlang der Aussenseite der Einführhülle als auch durch die Einführhülle hindurch nach oben entweichen. Vorzugsweise ist der Durchlass seitlich in der Einführhülle angebracht und befindet sich in deren verjüngtem Bereich.

In einer weiteren bevorzugten Ausführungsform ist ein Zusatzgewicht an der Einführvorrichtung, insbesondere an der Einführhülle, befestigbar. Durch Anbringen eines Zusatzgewichts an der Einführvorrichtung kann die Erdwärmesonde unter geringerem Kraftaufwand in ein Bohrloch eingeführt und die Beanspruchung der Erdwärmesonde, insbesondere des Sondenfusses, weiter verringert werden. Das Zusatzgewicht kann mit der Einführvorrichtung beispielsweise durch einen Bajonettverschluss, durch Schweissen, durch Kleben, durch einen Stift, durch Schrauben, durch Formschluss, durch eine Schnappverbindung und/oder durch Kabelbinder verbunden werden. Vorzugsweise kann das Zusatzgewicht mittels eines Bajonettverschlusses, der insbesondere in einem kreiszylinderförmigen Abschnitt im verjüngten Bereich der Einführhülle ausgebildet sein kann, mit der Einführhülle verbunden werden. Idealerweise ist das Zusatzgewicht an der Einführvorrichtung derart befestigbar, dass nur ein einmaliges Schliessen möglich ist, so dass beim Einführen der Erdwärmesonde in ein Bohrloch ein Lösen durch Druck oder Drall nicht möglich ist.

Um den Widerstand beim Einführen der Erdwärmesonde in ein Bohrloch möglichst gering zu halten, ist das Zusatzgewicht vorzugsweise ähnlich der Einführhülle "Torpedo-förmig" ausgestaltet. Das Zusatzgewicht kann beispielsweise im Wesentlichen die Form eines Zylinders aufweisen, dessen vorlaufender Endbereich annähernd kegelförmig verjüngt und an der Spitze abgerundet ist, oder von einem derartig ausgeformten Körper umgeben sein. Vorzugsweise umfasst das Zusatzgewicht eine Hülle, die eine ähnliche äussere Kontur wie die Einführhülle aufweist, die aber im Inneren mit einer Gewichtsmasse gefüllt ist. In einer bevorzugten Ausführungsform weist das Zusatzgewicht mindestens eine in Längsrichtung verlaufende, sickenförmige Vertiefung auf, so dass allfälliges Wasser im Bohrloch verdrängt werden und nach oben entweichen kann. Vorzugsweise ist das Zusatzgewicht in seinem verjüngten Bereich wiederum mit einem weiteren Zusatzgewicht verbindbar. So können je nach Bedarf mehrere Zusatzgewichte mit der Einführvorrichtung verbunden werden.

Um die Verbindung zwischen Erdwärmesonde und Einführvorrichtung zusätzlich zu stabilisieren, werden die Erdwärmesonde und die Einführhülle vorzugsweise nicht nur indirekt über das Befestigungselement miteinander verbunden, sondern zusätzlich auch noch direkt. Die Erdwärmesonde kann beispielsweise durch eine Lasche am Sondenfuss, durch Formschluss, durch Bolzen, Schrauben, Stifte, Kabelbinder oder durch eine Ausgussmasse mit der Einführhülle verbunden werden.

Vorzugsweise sind Einführhülle und Befestigungselement derart ausgestaltet, dass ein Injektionsrohr zum Einfüllen einer Injektionsmasse eingeführt werden kann. Idealerweise weist das Befestigungselement zu diesem Zweck Mittel zum Fixieren des Injektionsrohrs auf, beispielsweise in Form eines Vorsprungs oder einer Vertiefung, die es erlauben, das Injektionsrohr während des Einfüllens der Injektionsmasse in Position zu halten. Solche Mittel zum Fixieren des Injektionsrohrs weisen vorzugsweise Mittel zur Erhöhung der Reibung zwischen dem Befestigungselement und dem Injektionsrohr auf, beispielsweise eine Zahnung.

Weist die Einführhülle einen Durchlass auf, so kann die Injektionsmasse nicht nur in den Bereich innerhalb der Einführhülle verpresst werden, sondern sie kann auch durch den Durchlass in den Bereich ausserhalb der Einführhülle gelangen. Das Bohrloch kann so vollständig mit Injektionsmasse von unten her verpresst werden, so dass die Erdwärmesonde und die Einführvorrichtung überall mit Injektionsmasse umgeben sind und eine gute Wärmeübertragung zwischen Boden und Erdwärmesonde gewährleistet ist.

Die vorliegende Erfindung soll anhand der nachfolgenden Zeichnungen weiter ausgeführt werden.

### Es zeigt schematisch:

- Fig. 1: einen Längsschnitt durch eine erfindungsgemässe Einführvorrichtung umfassend eine Einführhülle und ein Befestigungselement, in der ein Erdwärmesondenpaar angeordnet ist, das über das Befestigungselement mit der Einführhülle verbunden ist;
- Fig. 2: einen Querschnitt durch die Einführvorrichtung aus Fig. 1 entlang der Achse A-A';
- Fig. 3: eine perspektivische Ansicht eines Befestigungselements für eine erfindungsgemässe Einführvorrichtung;
- Fig. 4: das Befestigungselement aus Fig. 3 in der Frontansicht;
- Fig. 5: eine Seitenansicht des Befestigungselements aus Fig. 4 in Richtung V;
- Fig. 6: eine Draufsicht auf das Befestigungselement aus Fig. 4 in Richtung VI;
- Fig. 7: einen Längsschnitt durch eine erfindungsgemässe Einführvorrichtung, die mit einem Zusatzgewicht verbunden ist.

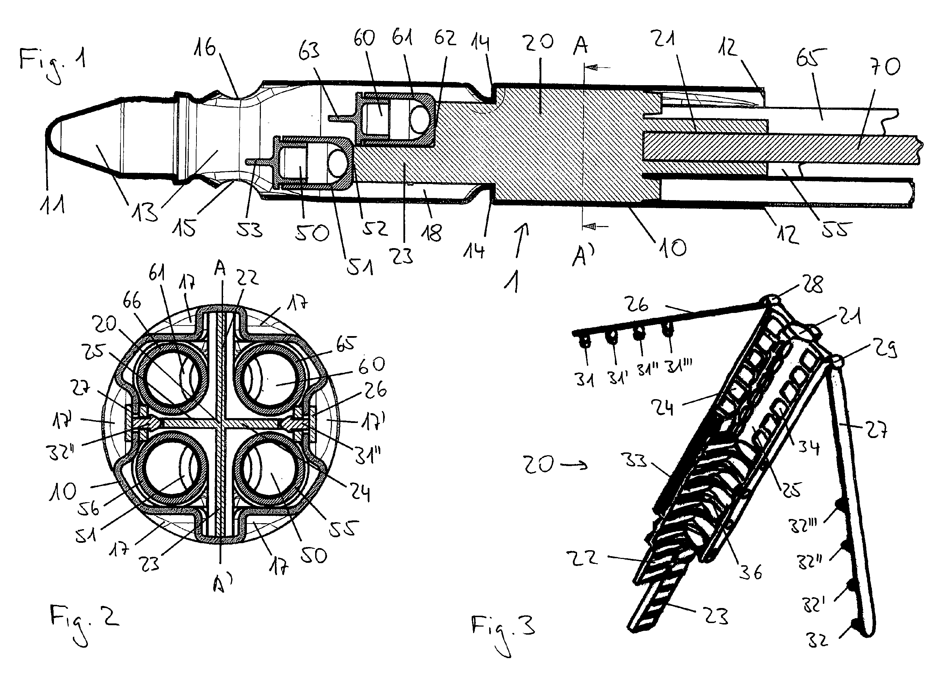

Fig. 1 zeigt einen Längsschnitt durch eine Einführvorrichtung 1, die zwei Erdwärmesonden 50, 60 umgibt. Die Einführvorrichtung 1 umfasst eine Einführhülle 10 und ein Befestigungselement 20. Die Einführhülle 10 ist als eigenständig formstabiler, hülsenförmiger Körper ausgebildet mit einem vorlaufenden Ende 11 und einem dem vorlaufenden Ende 11 gegenüberliegenden, offenen Ende 12. Die Einführhülle 10 ist gegen das vorlaufende Ende 11 hin in einem Bereich 13 annähernd kegelförmig verjüngt und weist eine abgerundete Spitze auf.

Die beiden Erdwärmesonden 50, 60 bestehen aus jeweils einem Sondenfuss 51, 61 sowie jeweils zwei Sondenrohren 55 und 56 respektive 65 und 66, die über den jeweiligen Sondenfuss 51, 61 miteinander verbunden sind. Die beiden Sondenfüsse 51, 61 sind im wesentlichen Y-förmig (in der Figur nicht sichtbar) und umfassen jeweils zwei im Wesentlichen parallele Anschlussabschnitte (die "Arme" des Y's), die mit den jeweiligen Sondenrohren 55, 56, respektive 65, 66 verbunden sind, sowie einen Basisabschnitt, der den "Fuss" des Y's bildet. Die Sondenfüsse 51, 61 sind in der Höhe versetzt angeordnet und weisen eine Auflagefläche 52, 62 für das Befestigungselement 20 auf, die zwischen den beiden Sondenrohren 55 und 56, respektive 65 und 66, bzw. zwischen den entsprechenden Anschlussabschnitten der Sondenfüsse 51, 61 angeordnet ist. Die Sondenfüsse 51, 61 weisen an ihrem Basisabschnitt eine Lasche 53, 63 auf, die zur Befestigung der Erdwärmesonde 50, 60 an der Einführhülle 10 verwendet werden kann.

Die gezeigte Einführhülle 10 ist einstückig ausgebildet. Alternativ wäre es aber auch möglich, die Einführhülle 10 aus zwei oder mehreren Stücken zusammenzufügen. Im Weiteren weist die Einführhülle 10 im kegelförmig verjüngten Bereich 13 zwei Durchlässe 15 und 16 auf, die beim Einführen der Einführhülle 10 in ein Bohrloch das Durchtreten von Wasser ermöglichen. In montiertem Zustand ist die Einführhülle 10 mit dem Befestigungselement 20 aus den Figuren 3 bis 6 verbunden. Das gezeigte Befestigungselement 20 ist einstückig ausgebildet. Alternativ wäre es aber auch möglich, das Befestigungselement 20 aus mehreren Stücken zusammenzusetzen. In der Regel wird in der gezeigten Ausführungsform zuerst das Befestigungselement 20 zwischen den Erdwärmesonden 50, 60 angeordnet und danach wird diese Kombination durch das offene Ende 12 der Einführhülle 10 in diese eingeführt, wobei das Befestigungselement 20 vorzugsweise mit den Erdwärmesonden 50, 60 verbunden wird, beispielsweise mittels eines Klebebands, um ein Auseinanderrutschen zu verhindern. Alternativ können auch zunächst die Erdwärmesonden 50, 60 durch das offene Ende 12 der Einführhülle 10 in diese eingeführt werden und anschliessend das Befestigungselement 20. Das Befestigungselement 20 liegt auf einem nach innen gerichteten, ringförmigen Vorsprung 14 der Einführhülle 10 auf. Unterhalb des Vorsprungs 14 vergrössert sich der Durchmesser der Einführhülle 10 wieder, so dass zwischen der Einführhülle 10 und den Sondenfüssen 51, 61 ein radialer Abstand entsteht, der einen ringförmigen Hohlraum 18 bildet. Der Hohlraum 18 dient als "Pufferzone" für die Erdwärmesonde 50, 60, so dass selbst tiefe Kratzer oder leichte Verformungen in der Einführhülle 10 die Erdwärmesonde 50, 60 nicht beeinträchtigen.

Das Befestigungselement 20 umfasst einen die Einführhülle 10 diametral durchlaufenden ersten Steg mit zwei Stegabschnitten 22 und 23. Der längere Stegabschnitt 23 des ersten Stegs liegt auf der Auflagefläche 52 des tiefer liegenden Sondenfusses 51 auf, während der kürzere Stegabschnitt 22 auf der Auflagefläche 62 des höher gelegenen Sondenfusses 61 aufliegt.

Das Befestigungselement 20 weist eine Aufnahme 21 für den Angriff einer Einführstange 70 auf. Die Aufnahme 21 ist als eine längliche Vertiefung mit kreisförmigem Querschnitt ausgestaltet, die in dem Endbereich des Befestigungselements 20 angeordnet ist, der von den Stegabschnitten 22, 23, 24, 25 abgewandt ist, und im montierten Zustand gegen das offene Ende 12 der Einführhülle 10 hin offen ist. So ist die Einführstange 70 in die Vertiefung einführbar. Das gezeigte Befestigungselement 20 weist im Weiteren zwei Befestigungsarme 26, 27 auf zur Befestigung des Befestigungselements 20 an der Einführhülle 10.

Die Einführhülle 10 weist im wesentlichen einen konstanten, kreisförmigen Querschnitt auf. In einem ersten Bereich zwischen dem Vorsprung 14 und dem verjüngten Bereich 13 bildet die Einführhülle 10 einen Kreis-Hohlzylinder. In einem zweiten Bereich zwischen dem Vorsprung 14 und dem offenen Ende 12 besitzt die Einführhülle 10 nahezu die Form eines Kreis-Hohlzylinder mit gleichem Durchmesser wie derjenige des ersten Bereichs, der aber durch in Längsrichtung der Einführhülle verlaufende Sicken 17, 17' gebildete Vertiefungen aufweist. Zwei erste, sich diametral gegenüberliegende Sickenpaare (Sicken 17) bilden eine Führung für den ersten Steg. Die anderen zwei Sicken 17' bilden auf der Aussenseite der Einführhülle 10 einen Raum für die Befestigungsarme 26, 27 des Befestigungselements 20. Ausserdem ermöglichen die Sicken 17, 17' das Durchfliessen von Wasser und/oder Injektionsmasse entlang der Einführhülle 10.

Figur 2 zeigt einen Querschnitt entlang der Achse A-A' durch die Einführvorrichtung 1. Die Einführhülle 10 umgibt die Erdwärmesonden 50, 60, deren Sondenrohre 55, 56, 65 und 66 über die Sondenfüsse 51 respektive 61 miteinander verbunden sind. Das in den Figuren 3 bis 6 separat gezeigte Befestigungselement 20 umfasst den ersten, die Einführhülle 10 diametral durchlaufenden Steg mit den zwei Stegabschnitten 22 und 23. Zusätzlich weist das Befestigungselement 20 einen zweiten, die Einführhülle 10 diametral durchlaufenden Steg auf, der rechtwinklig zum ersten Steg angeordnet ist, den ersten Steg mittig kreuzt und die Stegabschnitte 24 und 25 aufweist.

Die zwei Stegabschnitte 22, 23 des ersten Stegs sind in montiertem Zustand zwischen den beiden Sondenrohren 55 und 56, respektive 65 und 66 einer Erdwärmesonde 50, 60 angeordnet und liegen auf der Auflagefläche 52, 62 des Sondenfusses 51, 61 auf. Die beiden Stegabschnitte 24, 25 des zweiten Stegs sind beide gleich lang und liegen in montiertem Zustand zwischen den beiden Erdwärmesonden 50, 60 des Sondenpaares. Sie dienen der Befestigung des Befestigungselements 20 an der Einführhülle 10 und der weiteren Stabilisierung der Erdwärmesonden 50, 60 in der Einführhülle 10.

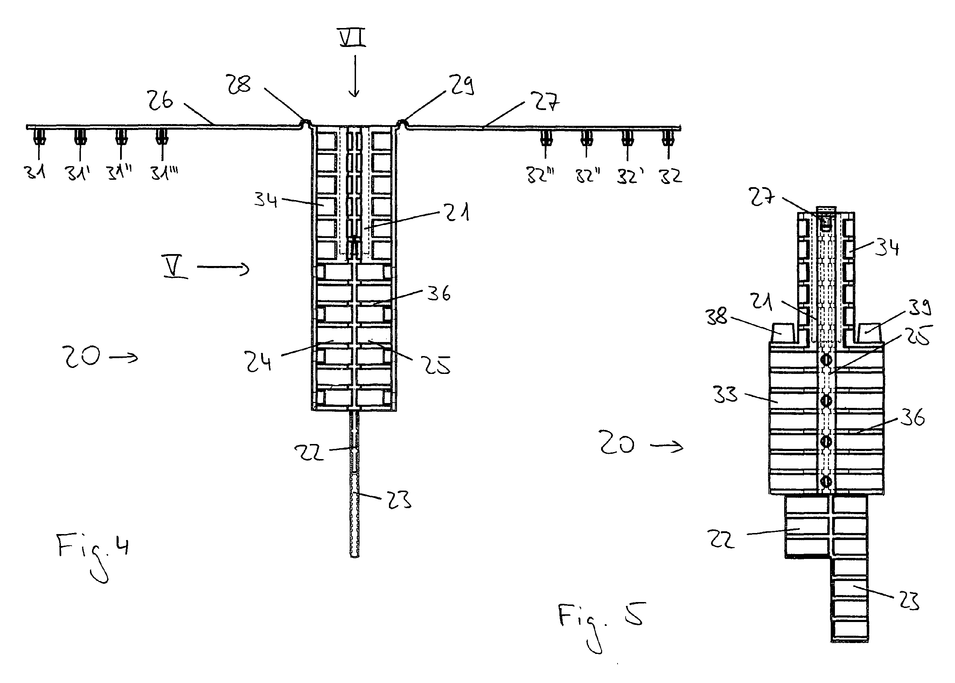

Das Befestigungselement 20 weist zwei Befestigungsarme 26 und 27 auf, die mit Zapfen 31, 31', 31'', 31''', respektive 32, 32', 32'', 32''' (vgl. Fig. 3) zur Befestigung des Befestigungselements 20 an der Einführhülle 10 versehen sind. In Figur 2 sind die Zapfen 31" und 32" gezeigt, die in montiertem Zustand die Befestigungsarme 26 und 27 mit der Einführhülle 10 verbinden. Dabei durchdringen die Zapfen 31", 32" die Einführhülle 10 und werden in einer Vertiefung an den Stegabschnitten 24, 25 des zweiten Stegs des Befestigungselements 20 verankert. Die in Figur 3 gezeigten Zapfen 31, 31', 31'', 31''', 32, 32', 32'', 32''' erlauben es, die Befestigungsarme 26, 27 unlösbar mit der Einführhülle 10 zu verbinden. Die Befestigungsarme 26, 27 sind, wie besonders aus Fig. 4 ersichtlich, über ein Filmscharnier 28, 29 am zweiten Steg angelenkt. Durch die Filmscharniere 28, 29 können die Befestigungsarme 26, 27, nach dem Einführen des Befestigungselements 20 in die Einführhülle 10 über den Rand der Einführhülle 10, an deren offenem Ende 12 in die betreffenden Sicken 17' umgeklappt werden.

Im Bereich des Befestigungselements 20, in dem sich die Stegabschnitte 22, 23, 24, 25 in axialer Richtung überlappen, sind zwischen jeweils zwei rechtwinklig zueinander stehenden Stegabschnitten 22, 23, 24, 25 mehrere vorstehende, rippenförmige Vorsprünge 36 ausgebildet, welche die beiden Stege miteinander verbinden und die Lage der Sondenrohre 55, 56, 65, 66 in der Einführhülle 10 stabilisieren. Die Stegabschnitte 22, 23, 24, 25 weisen Durchbrüche 33, 34 auf, die das Durchtreten von Injektionsmasse ermöglichen.

Im Weiteren weisen die gezeigten Stegabschnitte 22, 23 trapezförmige Vorsprünge 38, 39 auf, die als Mittel zum Fixieren des Injektionsrohrs während des Einfüllens der Injektionsmasse dienen. Zusätzlich können die trapezförmigen Vorsprünge 38, 39 Mittel zur Erhöhung der Reibung aufweisen, wie beispielsweise eine an den Kanten der trapezförmigen Vorsprünge 38, 39 ausgebildete Zahnung (in der Figur nicht gezeigt), um eine temporäre Verbindung des Injektionsrohrs mit dem Befestigungselement sicherzustellen. Im Weiteren können die trapezförmigen Vorsprünge 38, 39 auch mindestens einen Durchbruch aufweisen, damit das Austreten der Injektionsmasse aus dem Injektionsrohr nicht behindert wird.

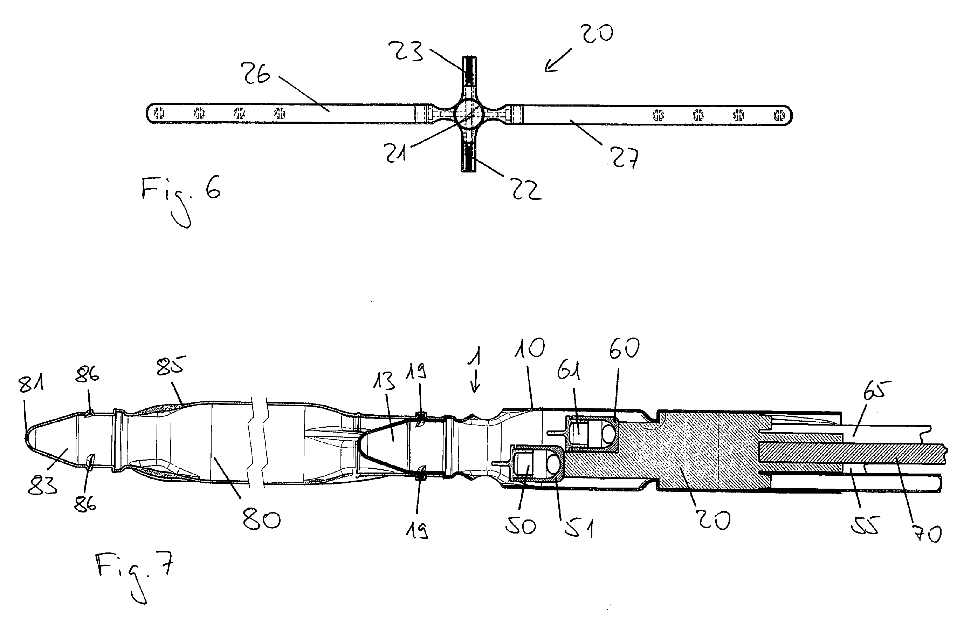

Die in Figur 7 dargestellte Einführvorrichtung 1 ist in einem kreiszylinderförmigen Abschnitt in der Nähe des vorlaufenden Endes 11 der Einführhülle 10 mit einem Zusatzgewicht 80 verbunden. Das Zusatzgewicht 80 besitzt im wesentlichen die Form eines "Torpedos", d. h. eines Zylinders, der in einem Bereich 83 gegen sein vorlaufendes Ende 81 hin annähernd kegelförmig verjüngt und an der Spitze abgerundet ist. Die Einführhülle 10 ist mit dem Zusatzgewicht 80 durch einen Bajonettverschluss 19 verbunden. Der in Figur 7 gezeigte Bajonettverschluss 19 erlaubt es, das Zusatzgewicht 80 unlösbar mit der Einführhülle 10 zu verbinden. Das Zusatzgewicht 80 weist in seinem verjüngten Bereich 83 einen Bajonettverschluss 86 auf, durch den das Zusatzgewicht 80 mit einem weiteren Zusatzgewicht verbunden werden könnte. Das gezeigte Zusatzgewicht 80 besteht im wesentlichen aus einer Hülle 85, die eine ähnliche äussere Kontur wie die Einführhülle 10 aufweist, die aber im Inneren mit einer Gewichtsmasse gefüllt ist.

## Patentansprüche

1. Einführvorrichtung (1) für eine Erdwärmesonde (50, 60), umfassend eine Einführhülle (10), die dazu bestimmt ist, in montiertem Zustand die Erdwärmesonde (50, 60) im Bereich des Sondenfusses (51, 61) zu umgeben, **gekennzeichnet durch** einen die Einführhülle (10) bildenden, eigenständig formstabilen, hülsenförmigen Körper mit einem vorlaufenden Ende (11) und ein Befestigungselement (20) zur Befestigung der Einführhülle (10) an der Erdwärmesonde (50, 60).

2. Einführvorrichtung (1) gemäss Anspruch 1, **dadurch gekennzeichnet, dass** die Einführhülle (10) in einem Bereich (13) gegen das vorlaufende Ende (11) hin wenigstens annähernd kegelförmig verjüngt ist und eine abgerundete Spitze aufweist.

3. Einführvorrichtung (1) gemäss Anspruch 1 oder 2,
**dadurch gekennzeichnet, dass** die Einführhülle (10) aus Polypropylen, Polyethylen, Polyamid, Polystyrol, Styrol-Butadien, Acrylnitril-Butadien-Styrol-Polymerisaten und/oder Polyurethan besteht.

4. Einführvorrichtung (1) gemäss einem der vorhergehenden Ansprüche, **dadurch gekennzeichnet, dass** das Befestigungselement (20) durch ein dem vorlaufenden Ende (11) gegenüberliegendes, offenes Ende (12) der Einführhülle (10) in diese einführbar ist.

5. Einführvorrichtung (1) gemäss einem der vorhergehenden Ansprüche, **dadurch gekennzeichnet, dass** das Befestigungselement (20) mit der Einführhülle (10) mittels eines Befestigungsorgans verbindbar ist.

6. Einführvorrichtung (1) gemäss einem der vorhergehenden Ansprüche, **dadurch gekennzeichnet, dass** das Befestigungselement (20) Befestigungsarme (26, 27) zur Befestigung an der Einführhülle (10) aufweist.

7. Einführvorrichtung (1) gemäss einem der vorhergehenden Ansprüche, **dadurch gekennzeichnet, dass** das Befestigungselement (20) aus Polypropylen, Polyethylen, Polyamid, Polystyrol, Styrol-Butadien, Acrylnitril-Butadien-Styrol-Polymerisaten und/oder Polyurethan besteht.

8. Einführvorrichtung (1) gemäss einem der vorhergehenden Ansprüche, **dadurch gekennzeichnet, dass** das Befestigungselement (20) mindestens einen in montiertem Zustand diametral durch die Einführhülle (10) verlaufenden Steg aufweist, der in montiertem Zustand auf der Auflagefläche (52, 62) des Sondenfusses (51, 61) aufliegt.

9. Einführvorrichtung (1) gemäss einem der vorhergehenden Ansprüche, **dadurch gekennzeichnet, dass** das Befestigungselement (20) eine Aufnahme (21) für eine Einführstange (70) aufweist.

10. Einführvorrichtung (1) gemäss einem der vorhergehenden Ansprüche, **dadurch gekennzeichnet, dass** die Einführhülle (10) in ihrem verjüngten
Bereich (13) mindestens einen Durchlass (15, 16) aufweist, welcher derart ausgestaltet ist, dass beim Einführen der Einführhülle (10) in ein Bohrloch das Durchtreten von Wasser möglich ist.

11. Einführvorrichtung (1) gemäss einem der vorhergehenden Ansprüche, **dadurch gekennzeichnet, dass** ein Zusatzgewicht (80) an der Einführhülle (10) befestigbar ist, vorzugsweise mittels Bajonettverschluss (19).
